# FASCICULE DE BREVET EUROPEEN

(11) **EP 3 213 213 B1**
(45) Date de publication et mention de la délivrance du brevet: **29.07.2020**
(21) Numéro de dépôt: 15798510.2
(22) Date de dépôt: 27.10.2015
(51) Int. Cl.: G06F 11/22

(54) **PROCÉDÉ, ÉQUIPEMENT ET SYSTÈME D'AIDE AU DIAGNOSTIC**
DIAGNOSEUNTERSTÜTZUGSVERFAHREN, -VORRICHTUNG UND -SYSTEM
DIAGNOSTIC AID METHOD, DEVICE AND SYSTEM

(30) Priorité: 30.10.2014 FR 1460455
(43) Date de publication de la demande: 06.09.2017
(73) Titulaire: PSA Automobiles SA, 78300 Poissy (FR)
(72) Inventeur: JOLY, Thierry, F-92350 Le Plessis Robinson (FR); PINON, Franck, F-78490 Mere (FR); VIF, Jean Francois, F-91700 Ste Genevieve des Bois (FR)
(74) Mandataire: Jeannin, Laurent Jean-Pierre
(86) Numéro de dépôt international: PCT/FR2015/052897
(87) Numéro de publication internationale: WO 2016/066953

(56) Documents cités:
- US-A1- 2007 100 519

## Description

L'invention concerne les systèmes d'aide au diagnostic à distance pour des véhicules automobiles.

La croissance de l'électronique embarquée à bord des véhicules a complexifié la maintenance des véhicules. Face à cette complexité, les constructeurs de véhicules ont développé des fonctions d'autodiagnostic toujours plus performantes permettant de signaler les anomalies détectées par le système embarqué lui-même.

Actuellement, un opérateur de maintenance dispose de fonctions et d'indicateurs affectés à des pannes distinctes (on parle généralement de codes défauts ou DTC pour Diagnostic Trouble Codes). Dans un garage, pour localiser précisément la panne du véhicule, l'opérateur utilise ainsi des fonctions de nature très différentes comme : la lecture d'informations prélevées sur le véhicule, l'activation de routines de test, la réinitialisation d'apprentissages ou le téléchargement d'un logiciel correcteur d'une anomalie.

Avant d'effectuer un diagnostic du véhicule, il est nécessaire de faire un état des lieux du véhicule de façon à déterminer précisément les composants électroniques ainsi que l'état du véhicule. Cet état des lieux est réalisé au cours d'une procédure spécifique parfois appelée « Test Global ». Cette procédure permet de faire l'inventaire des calculateurs électroniques présents dans le véhicule, d'en faire l'identification (type de calculateur, version du matériel, version du logiciel, version de calibration) et de réaliser la lecture des défauts enregistrés (présents ou fugitifs) ainsi que les contextes véhicule associés à ces défauts.

Selon l'art connu, cette procédure est réalisée à l'aide d'un outil dédié qui doit être connecté physiquement sur le véhicule.

Cette procédure a pour inconvénient d'être longue, mais elle est nécessaire avant d'effectuer un diagnostic. Le document US2007100519 décrit un système d'aide au diagnostic à distance d'un réseau de calculateurs compris dans un véhicule, tout en permettant l'usage de protocoles différents.

L'invention a donc pour but de remédier aux problèmes précités en proposant une procédure et un équipement permettant d'effectuer à distance une procédure effectuant un inventaire de calculateurs électroniques mettant en oeuvre des protocoles de diagnostic différents et permettant ainsi de détecter des erreurs de ces calculateurs.

Elle propose plus précisément à cet effet un procédé d'aide au diagnostic à distance d'un véhicule, mis en œuvre par un équipement d'aide au diagnostic, comportant les étapes suivantes :
- Le téléchargement d'une liste de calculateurs à partir d'une base de données de véhicule,
- La détermination pour chaque calculateur de la liste, d'un protocole de communication pour dialoguer avec ledit calculateur,
- L'envoi pour chaque calculateur, d'au moins une requête de diagnostic selon le protocole de communication déterminé,
- La réception d'au moins une réponse à la requête de diagnostic envoyé,
- La mise à jour d'une base de données de diagnostic à partir la réponse reçue.

L'invention permet d'effectuer un inventaire à distance des calculateurs d'un véhicule et de détecter des erreurs de ces calculateurs. Cet inventaire est effectué indépendamment d'un outil de diagnostic situé en concession. L'invention permet de prendre en compte la diversité des calculateurs embarqués à bord d'un véhicule et la diversité des protocoles de diagnostic mis en œuvre par chacun de ces calculateurs.

Ainsi, lorsqu'un véhicule arrive en concession, celui-ci peut être directement diagnostiqué. En effet, l'équipement de diagnostic en concession peut alors accéder à l'inventaire effectué à distance.

L'accès à une base de données de véhicule permet à l'équipement de travailler avec les données les plus à jour du constructeur du véhicule.

Selon une caractéristique de l'invention, le procédé selon l'invention comporte en outre l'émission d'une alerte si la réponse indique un disfonctionnement du véhicule.

L'invention permet une analyse exhaustive des calculateurs du véhicule en interrogeant chacun des calculateurs du véhicule. Ainsi, n'importe quel défaut du véhicule peut être signalé soit au conducteur, soit au constructeur de véhicule.

Selon une première variante de l'invention, l'envoi, pour chaque calculateur, d'au moins une requête de diagnostic est réalisé successivement pour chaque calculateur de la liste. Cette variante a pour avantage d'être compatible avec un grand nombre de véhicules.

Selon une deuxième variante de l'invention, l'envoi, pour chaque calculateur, d'au moins une requête de diagnostic est réalisé simultanément pour tous les calculateurs de la liste, le procédé comportant en outre une étape de création d'un script regroupant un ensemble de requêtes de diagnostic destinées à chacun des calculateurs. Cette variante a pour avantage d'être plus rapide que la précédente en raison du nombre plus réduit d'échanges entre le véhicule et l'équipement d'aide au diagnostic.

Selon une caractéristique de l'invention, le procédé selon l'invention comporte en outre, l'émission d'une demande d'une liste de calculateurs du véhicule, à destination de la base de données de véhicule, la demande comprenant un identifiant du véhicule.

Cette caractéristique permet à l'équipement d'aide au diagnostic de travailler sur des données à jour, sans avoir à maintenir lui-même une base de données de configuration de véhicule.

Selon une caractéristique de l'invention, la détermination d'un protocole pour un calculateur comporte :
- La sélection d'un protocole parmi un ensemble de protocoles compatibles avec le calculateur,
- L'envoi, au calculateur, d'une requête avec le protocole sélectionné,
- L'attente d'une réponse de la part du calculateur,
- Si une réponse est reçue, la configuration de l'équipement d'aide au diagnostic de façon à communiquer avec le calculateur selon le protocole sélectionné,
- Si aucune réponse n'est reçue, la répétition de l'étape de sélection en retirant le protocole de l'ensemble de protocoles compatibles.

Cette étape permet de déterminer un protocole de communication pour communiquer avec le calculateur sans connaître la version matérielle et/ou la version logicielle du calculateur.

Selon une caractéristique de l'invention, le procédé selon l'invention comporte, en outre, une étape d'émission, par le véhicule, d'une requête à destination de la base de données de véhicule lors d'une modification d'un calculateur dudit véhicule, la requête indiquant la teneur de la modification du calculateur.

Cette étape permet de maintenir la base de données de configuration toujours à jour.

L'invention concerne aussi un équipement selon la revendication 7.

L'invention concerne aussi système selon la revendication 8.

D'autres caractéristiques et avantages de l'invention apparaîtront à l'examen de la description détaillée ci-après, et des dessins annexés, sur lesquels:
- la figure 1 illustre de manière schématique une première variante d'un système d'aide au diagnostic conforme à la présente invention ;
- la figure 2 illustre de manière schématique une deuxième variante d'un système d'aide au diagnostic conforme à la présente invention ;
- la figure 3 est un logigramme représentant le procédé selon l'invention ;
- la figure 4 est un logigramme représentant le détail d'une étape de sélection d'un protocole de communication ;

Les dessins annexés pourront non seulement servir à compléter l'invention, mais aussi contribuer à sa définition, le cas échéant.

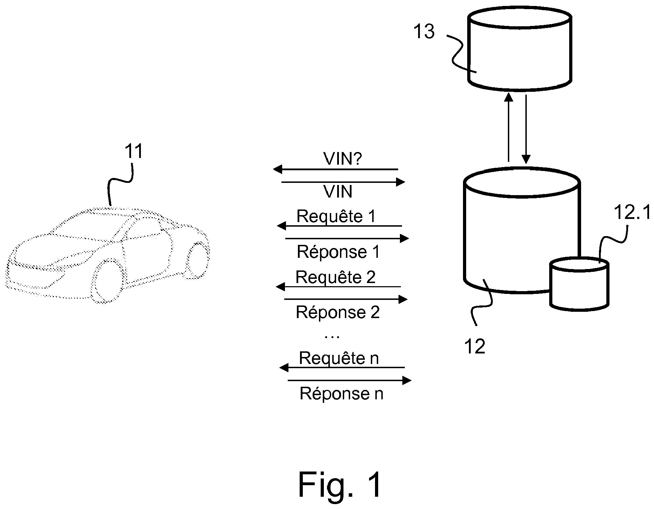

La figure 1 illustre de manière schématique une première variante d'un système d'aide au diagnostic conforme à la présente invention. Un tel système comporte un véhicule 11, un équipement d'aide au diagnostic 12 et une base de données de véhicules 13.

Le véhicule 11 comporte un dispositif télématique apte à échanger des données avec des équipements débarqués par l'intermédiaire d'une connexion sans fils par exemple Bluetooth ou wifi.

Le véhicule 11 comporte un premier calculateur, aussi appelé calculateur télématique. Le premier calculateur ECU1 est apte à échanger des données à distance avec un outil de diagnostic par exemple par l'intermédiaire d'un réseau téléphonique sans fil (GSM ou 3G).

Le véhicule comporte par exemple un deuxième calculateur ECU2 dédié par exemple à la gestion du moteur du véhicule 11. Le véhicule comporte par exemple un troisième calculateur ECU3 dédié par exemple à la gestion de l'habitacle du véhicule. Le troisième calculateur gère un certain nombre d'équipements électriques du véhicule 11 et notamment, des airbags, des éclairages intérieurs, le verrouillage/déverrouillage des portes et du coffre, le fonctionnement des vitres et de toit ouvrant électriques, le cadencement des essuie-glaces.

Chacun de ces calculateurs comporte au moins un processeur et au moins une mémoire.

Les calculateurs communiquent entre eux au moyen d'au moins un bus de données par exemple de type LIN ou de type CAN.

Le premier calculateur joue le rôle de passerelle de communication entre l'intérieur et l'extérieur du véhicule. En particulier, le premier calculateur reçoit les requête de diagnostic et les transmets au calculateur concerné par l'intermédiaire du bus de données.

Le véhicule 11 est apte à envoyer au dispositif d'aide au diagnostic 12 un code l'identifiant, par exemple son VIN. Chacun des calculateurs du véhicule est capable de répondre aux requêtes de diagnostic provenant de l'équipement d'aide au diagnostic 12, lorsque celles-ci sont formulées selon un protocole reconnu par le calculateur.

Cependant chacun des calculateurs reconnaît un protocole de diagnostic qui lui est propre. Le protocole reconnu dépend notamment du type de calculateur (calculateur moteur, calculateur télématique, ...) mais également de la version de ce calculateur, les calculateurs les plus anciens ne reconnaissant pas forcément les même protocoles de diagnostic que les calculateurs les plus récents.

L'équipement d'aide au diagnostic 12 est un équipement débarqué, c'est-à-dire un équipement situé à l'extérieur et à distance du véhicule 11. L'équipement d'aide au diagnostic 12 comporte des moyens pour interroger un véhicule 11 par l'intermédiaire d'une requête de diagnostic.

Il comporte aussi une base de données 12.1 pour stocker les réponses à ces requêtes.

L'équipement d'aide au diagnostic 12 met en œuvre le procédé d'aide au diagnostic selon l'invention.

Le dispositif d'aide au diagnostic 12 :
- demande une configuration d'un véhicule à partir d'un identifiant de véhicule ;
- émet des requêtes de diagnostic à destination des calculateurs d'un véhicule ;
- stocke les réponses à ces requêtes dans une base de données 12.1.

La configuration du véhicule comporte une liste des calculateurs montés sur le véhicule, éventuellement le protocole de communication de chaque calculateur et, éventuellement, le type de réseau sur lequel il est monté (par exemple CAN pour Controller Area Network ou LIN pour Local Interconnect Network). Par protocole de communication, on entend, en particulier, protocole de dialogue pour le diagnostic (ou autrement dit protocole de communication avec un outil de diagnostic).

La base de données de véhicules comporte pour chaque véhicule, identifié par un code unique, (le VIN, pour Vehicule Identification Number) une série de données relatives à la configuration du véhicule, par exemple, le type de moteur, les différentes options montées sur le véhicule, ....

Ces données décrivent aussi quels calculateurs sont embarqués dans le véhicule.

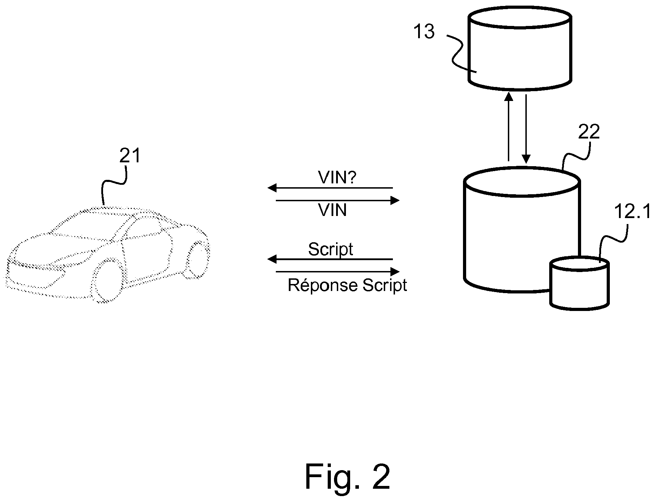

La figure 2 illustre de manière schématique une deuxième variante d'un système d'aide au diagnostic selon l'invention. La deuxième variante comporte comme la première variante : un véhicule 21, un équipement d'aide au diagnostic 22 et une base de données de véhicule 13.

Le véhicule 21 de la deuxième variante diffère de celui 11 de la première variante en ce qu'il est apte à recevoir en ensemble de requêtes regroupées sous la forme d'un script, à exécuter le script, répondre aux requêtes du script et à regrouper les réponses à ces requêtes dans un message destiné à l'équipement d'aide au diagnostic.

L'équipement d'aide au diagnostic 22 de la deuxième variante diffère de celui de la première 12 en ce qu'il est apte à regrouper un ensemble de requêtes dans un script et à recevoir un ensemble de réponse à ces requêtes dans un unique message.

Les autres éléments sont identiques aux deux variantes.

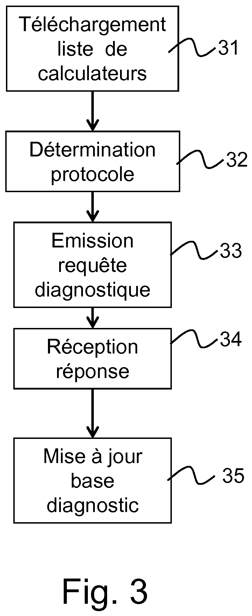

L'invention concerne aussi un procédé d'aide au diagnostic d'un véhicule. En référence à la figure 3, le procédé comporte les étapes suivantes :
Une étape consiste à télécharger 31 une liste de calculateurs à partir de la base de données de véhicule 13. Pour récupérer cette liste, l'équipement d'aide diagnostic 12,22 envoie à la base de données de véhicules 13, une requête comportant un identifiant du véhicule 11,21 par exemple le VIN.

En réponse à cette requête la base de données 13 détermine la liste des calculateurs présents à bord du véhicule 11,21.

Si la base de données comporte la liste des calculateurs montées à bord du véhicule 11,21 associé à l'identifiant, cette liste est téléchargé par l'outil de d'aide au diagnostic 12.

Cependant, il est possible que cette liste ne soit pas renseignée dans la base de données 13. Dans ce cas, la base de données 13 fournit à l'équipement d'aide au diagnostic 12,22, une liste générique de calculateurs qui sont potentiellement montés à bord du véhicule 11,21. Cette liste est par exemple déterminée à l'aide du modèle du véhicule 11,21.

Dans ce cas, certains calculateurs ne sont pas forcément effectivement embarqués à bord du véhicule 11,21.

Le procédé comporte aussi une étape de détermination 32, pour chaque calculateur de la liste, d'un protocole de communication pour dialoguer avec ledit calculateur. La description des calculateurs fournis dans la liste est générique. Elle n'indique que la fonction du calculateur (calculateur moteur, calculateur habitacle, ...). Pour un calculateur donné, il existe plusieurs versions de ce calculateur. Ces versions ne supportent pas toutes les mêmes protocoles de communications. C'est pourquoi, l'équipement de diagnostic doit déterminer, pour chaque calculateur, quel protocole de communication est supporté par celui-ci.

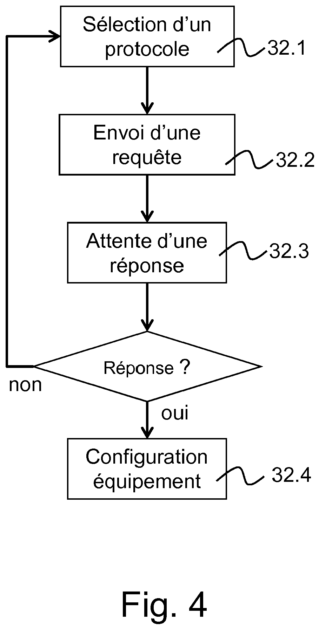

En référence à la figure 4, l'étape de détermination 32 d'un protocole de communication pour un calculateur comporte :
- La sélection (32.1) d'un protocole parmi un ensemble de protocoles compatibles avec le calculateur,
- L'envoi (32.2), au calculateur, d'une requête avec le protocole sélectionné,
- L'attente (32.3) d'une réponse de la part du calculateur,
- Si une réponse est reçue, la configuration (32.4) de l'équipement d'aide au diagnostic (12,22) de façon à communiquer avec le calculateur selon le protocole sélectionné,
- Si aucune réponse n'est reçue, la répétition de l'étape de sélection en retirant le protocole de l'ensemble de protocoles compatibles.

Par exemple, l'équipement d'aide au diagnostic détermine tous les protocoles compatibles avec un calculateur moteur. Et, pour chacun de ces protocoles, et tant qu'aucune réponse ne lui parvient, l'équipement adresse une requête au calculateur. Lorsqu'une réponse parvient à l'équipement 12,22, c'est que le calculateur est capable de communiquer via le protocole de la requête à laquelle il vient de répondre.

Si aucune réponse ne parvient à l'équipement à l'issue de l'énumération de la totalité des protocoles potentiellement compatible alors, le calculateur est considéré comme étant non monté à bord du véhicule.

Le procédé comporte aussi une étape de d'envoi 33 pour chaque calculateur, d'au moins une requête de diagnostic selon le protocole de communication déterminé.

Le procédé comporte aussi de réception 34 d'au moins une réponse à la requête de diagnostic envoyé.

Le procédé comporte aussi une étape de mise à jour 35 de la base de données de diagnostic 12.1 à partir la réponse reçue.

Selon une première variante du procédé selon l'invention, l'envoi (33), pour chaque calculateur, d'au moins une requête de diagnostic est réalisé successivement pour chaque calculateur de la liste.

Cette première variante du procédé selon l'invention est mise en œuvre avec la première variante du système selon l'invention.

Selon une deuxième variante du procédé selon l'invention, l'envoi (33), pour chaque calculateur, d'au moins une requête de diagnostic est réalisé simultanément pour tous les calculateurs de la liste, le procédé comportant en outre une étape de création d'un script regroupant un ensemble de requêtes de diagnostic destinées à chacun des calculateurs.

Cette deuxième variante du procédé selon l'invention est mise en œuvre avec la deuxième variante du système selon l'invention.

## Revendications

1. Procédé, mis en œuvre par un équipement (12,22) d'aide au diagnostic, d'aide au diagnostic à distance d'un véhicule (11,21) comportant une pluralité de calculateurs, dont au moins deux calculateurs mettent en œuvre un protocole de diagnostic différent, dont un premier calculateur est apte à échanger des données à distance avec l'équipement (12,22) d'aide au diagnostic, lesdits calculateurs communiquant entre eux au moyen d'au moins un bus de données comportant les étapes suivantes :
- Le téléchargement (31) d'une liste de calculateurs à partir d'une base de données de véhicule (13),
- La détermination (32) pour chaque calculateur de la liste, d'un protocole de diagnostic pour dialoguer avec ledit calculateur,
- L'envoi (33) pour chaque calculateur, d'au moins une requête de diagnostic selon le protocole de diagnostic déterminé,
- La réception (34) d'au moins une réponse à la requête de diagnostic envoyé,
- La mise à jour (35) d'une base de données de diagnostic (12.1)
à partir de la réponse reçue.
la détermination (32) d'un protocole pour un calculateur comportant :
- La sélection (32.1) d'un protocole parmi un ensemble de protocoles compatibles avec le calculateur,
- L'envoi (32.2), au calculateur, d'une requête avec le protocole sélectionné,
- L'attente (32.3) d'une réponse de la part du calculateur,
- Si une réponse est reçue, la configuration (32.4) de l'équipement d'aide au diagnostic (12,22) de façon à communiquer avec le calculateur selon le protocole sélectionné,
- Si aucune réponse n'est reçue, la répétition de l'étape de sélection en retirant le protocole de l'ensemble de protocoles compatibles.

2. Procédé selon la revendication 1, **caractérisé en ce qu'**il comporte en outre l'émission (36) d'une alerte si la réponse indique un disfonctionnement du véhicule (11,21).

3. Procédé selon l'une des revendications 1 ou 2, **caractérisé en ce que** l'envoi (33), pour chaque calculateur, d'au moins une requête de diagnostic est réalisé successivement pour chaque calculateur de la liste.

4. Procédé selon l'une des revendications 1 ou 2, **caractérisé en ce que** l'envoi (33), pour chaque calculateur, d'au moins une requête de diagnostic est réalisé simultanément pour tous les calculateurs de la liste, le procédé comportant en outre une étape de création d'un script regroupant un ensemble de requêtes de diagnostic destinées à chacun des calculateurs.

5. Procédé selon l'une des revendications précédentes, **caractérisée en ce qu'**il comporte, en outre, l'émission d'une demande d'une liste de calculateur du véhicule, à destination de la base de données de véhicule (13), la demande comprenant un identifiant du véhicule (11,21).

6. Procédé selon l'une des revendications précédentes, **caractérisée en ce qu'**il comporte en outre une étape d'émission, par le véhicule (11,21), d'une requête à destination de la base de données (13) de véhicule lors d'une modification d'un calculateur dudit véhicule (11,21), la requête indiquant la teneur de la modification du calculateur.

7. Equipement (12,22) d'aide au diagnostic à distance d'un véhicule (11,21) **caractérisé en ce qu'**il comporte des moyens configurés pour mettre en œuvre le procédé selon l'une des revendications précédentes.

8. Système comportant un véhicule (11,21) et une base de données (13) de de véhicules, **caractérisé en ce qu'**il comporte, en outre, un équipement (12,22) selon la revendication précédente communiquant avec le véhicule (11,21) et la base de données (13) de véhicules.

## Patentansprüche

1. Durch eine Diagnosehilfseinrichtung (12, 22) implementiertes Verfahren zur Unterstützung der Ferndiagnose eines Fahrzeugs (11, 21), das eine Vielzahl von Rechnern umfasst, von denen mindestens zwei Rechner ein unterschiedliches Diagnoseprotokoll implementieren, von denen ein erster Rechner in der Lage ist, Daten ferngesteuert mit der Diagnosehilfseinrichtung (12, 22) auszutauschen, wobei die Rechner miteinander über mindestens einen Datenbus kommunizieren, der die folgenden Schritte umfasst:
- Herunterladen (31) einer Liste von Computern aus einer Fahrzeugdatenbank (13),
- Bestimmen (32) für jeden Computer in der Liste ein Diagnoseprotokoll für den Dialog mit diesem Computer,
- Senden (33) von mindestens einer Diagnoseanforderung für jeden Computer gemäß dem festgelegten Diagnoseprotokoll,
- Empfang (34) von mindestens einer Antwort auf die gesendete Diagnoseanforderung,
- Aktualisierung (35) einer diagnostischen Datenbank (12.1) aus der erhaltenen Antwort die Bestimmung (32) eines Protokolls für einen Computer bestehend aus :
- Auswahl (32.1) eines Protokolls aus einer Reihe von Protokollen, die mit dem Computer kompatibel sind,
- Senden (32.2) einer Abfrage mit dem ausgewählten Protokoll an den Computer,
- Warten (32.3) auf eine Antwort des Computer,
- Wenn eine Antwort empfangen wird, ist die Konfiguration (32.4) der Diagnosehilfseinrichtung (12, 22) zur Kommunikation mit dem Computer entsprechend der
Protokoll ausgewählt,
- Wenn keine Antwort erhalten wird, wiederholen Sie den Auswahlschritt, indem Sie das Protokoll aus dem Satz der kompatiblen Protokolle entfernen.

2. Verfahren nach Anspruch 1, **dadurch gekennzeichnet, dass** es ferner die Übertragung (36) eines Alarms umfasst, wenn die Antwort auf eine Fehlfunktion des Fahrzeugs (11, 21) hinweist.

3. Verfahren nach einem der Ansprüche 1 oder 2, **dadurch gekennzeichnet, dass** das Senden (33) mindestens einer Diagnoseanforderung für jeden Rechner nacheinander für jeden Rechner der Liste durchgeführt wird.

4. Verfahren nach einem der Ansprüche 1 oder 2, **dadurch gekennzeichnet, dass** das Senden (33) mindestens einer Diagnoseanforderung für jeden Computer gleichzeitig für alle Computer in der Liste durchgeführt wird, wobei das Verfahren auch einen Schritt der Erstellung eines Skripts umfasst, das eine Gruppe von Diagnoseanforderungen, die für jeden der Computer bestimmt sind, zusammenfasst.

5. Verfahren gemäß einem der vorhergehenden Ansprüche, **dadurch gekennzeichnet, dass** es außerdem die Übertragung einer Anfrage für eine Fahrzeug-Computerliste umfasst, die für die Fahrzeugdatenbank (13) bestimmt ist, wobei die Anfrage eine Kennung des Fahrzeugs (11, 21) umfasst.

6. Verfahren gemäß einem der vorhergehenden Ansprüche, **dadurch gekennzeichnet, dass** es ferner einen Schritt des Sendens einer Anfrage an die Fahrzeugdatenbank (13) durch das Fahrzeug (11, 21) umfasst, wenn ein Computer des Fahrzeugs (11, 21) modifiziert wird, wobei die Anfrage den Inhalt der Modifikation des Computers angibt.

7. Ausrüstung (12, 22) zur Unterstützung der Ferndiagnose eines Fahrzeugs (11, 21), **dadurch gekennzeichnet, dass** sie Mittel umfasst, die so konfiguriert sind, dass sie das Verfahren gemäß einem der vorhergehenden Ansprüche durchführen.

8. System, das ein Fahrzeug (11, 21) und eine Fahrzeugdatenbank (13) umfasst, **dadurch gekennzeichnet, dass** es ferner Ausrüstungen (12, 22) gemäß dem vorhergehenden Anspruch umfasst, die mit dem Fahrzeug (11, 21) und der Fahrzeugdatenbank (13) kommunizieren.

## Claims

1. Method, implemented by a (12, 22), for helping the remote diagnosis of a vehicle (11, 21) comprising a plurality of computers, at least two computers of which implement a different diagnostic protocol, a first computer of which is able to exchange data remotely with the diagnostic help equipment (12, 22), said computers communicating with each other by means of at least one data bus comprising the following steps:
- downloading (31) a list of computers from a vehicle database (13),
- determining (32) for each computer in the list, a diagnostic protocol for dialoguing with said computer,
- sending (33) for each computer at least one diagnostic request according to the determined diagnostic protocol,
- receipt (34) of at least one response to the diagnostic request sent,
- updating (35) of a diagnostic database (12.1) from the response received the determination (32) of a protocol for a computer comprising :
- selecting (32.1) a protocol from a set of protocols compatible with the computer,
- sending (32.2) a query with the selected protocol to the computer,
- waiting (32.3) for a response from the computer,
- if a response is received, the configuration (32.4) of the diagnostic help equipment (12,22) to communicate with the computer according to the protocol selected,
- if no response is received, repeat the selection step by removing the protocol from the set of compatible protocols.

2. A method according to claim 1, **characterized in that** it further comprises transmitting (36) an alert if the response indicates a malfunction of the vehicle (11, 21).

3. Method according to one of claims 1 or 2, **characterized in that** the sending (33), for each computer, of at least one diagnostic request is carried out successively for each computer on the list.

4. Method according to one of claims 1 or 2, **characterized in that** the sending (33), for each computer, of at least one diagnostic request is carried out simultaneously for all the computers in the list, the method also comprising a step of creating a script grouping together a set of diagnostic requests intended for each of the computers.

5. Method according to one of the preceding claims, **characterized in that** it further comprises the transmission of a request for a vehicle computer list, intended for the vehicle database (13), the request comprising an identifier of the vehicle (11, 21).

6. A method according to one of the preceding claims, **characterized in that** it further comprises a step of sending, by the vehicle (11, 21), a request to the vehicle database (13) when a computer of said vehicle (11, 21) is modified, the request indicating the content of the modification of the computer.

7. Equipment (12, 22) for assisting the remote diagnosis of a vehicle (11, 21), **characterized in that** it comprises means configured to implement the procedure according to one of the preceding claims.

8. System comprising a vehicle (11, 21) and a vehicle database (13), **characterized in that** it further comprises equipment (12, 22) according to the previous claim communicating with the vehicle (11, 21) and the vehicle database (13).
